(19) **Europäisches Patentamt / European Patent Office / Office européen des brevets**

(11) **EP 3 214 111 B1**

(12) **EUROPEAN PATENT SPECIFICATION**

(45) Date of publication and mention of the grant of the patent:
**12.12.2018 Bulletin 2018/50**

(51) Int Cl.:
*C08L 9/08* (2006.01)     *C08L 9/06* (2006.01)
*C08J 3/20* (2006.01)     *B60C 1/00* (2006.01)

(21) Application number: **15853656.5**

(22) Date of filing: **23.10.2015**

(86) International application number:
**PCT/JP2015/005350**

(87) International publication number:
**WO 2016/067581 (06.05.2016 Gazette 2016/18)**

(54) **METHOD FOR PRODUCING RUBBER COMPOSITION, RUBBER COMPOSITION, AND TIRE**

VERFAHREN ZUR HERSTELLUNG EINER KAUTSCHUKZUSAMMENSETZUNG, KAUTSCHUKZUSAMMENSETZUNG UND REIFEN

PROCÉDÉ DE PRODUCTION D'UNE COMPOSITION DE CAOUTCHOUC, COMPOSITION DE CAOUTCHOUC ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2014 JP 2014218601**

(43) Date of publication of application:
**06.09.2017 Bulletin 2017/36**

(73) Proprietor: **Bridgestone Corporation**
**Tokyo 104-8340 (JP)**

(72) Inventor: **YAMAGISHI, Yasushi**
**Tokyo 104-8340 (JP)**

(74) Representative: **Oxley, Robin John George**
**Marks & Clerk LLP**
**90 Long Acre**
**London WC2E 9RA (GB)**

(56) References cited:
EP-A- 1 652 878    EP-A1- 2 695 911
WO-A1-2010/000294    WO-A1-2013/001826
FR-A1- 3 014 443    JP-A- 2008 184 505
JP-A- 2013 035 892    JP-A- 2013 213 166
JP-A- 2013 213 167    JP-A- 2013 216 753
JP-A- 2015 127 383    US-A1- 2011 226 395
US-A1- 2012 289 647    US-A1- 2013 267 638

- **UNITED CHEMICAL PRODUCTS: "OIL-EXTENDED BUTADIENE-STYRENE RUBBERS SBR 1712", , 5 October 1999 (1999-10-05), XP002772617, RUSSIA Retrieved from the Internet: URL:http://www.petro-chemicals.com/specs/SBR-1712.spec.stand.astm.latest.UCP.pdf [retrieved on 2017-07-28]**
- **"EMULSION STYRENE-BUTADIENE RUBBER WITH OIL (SBR)", SIBUR INTERNATIONAL , 2017, XP002772618, Retrieved from the Internet: URL:http://sibur-int.com/product/rubber/catalog/item251.php [retrieved on 2017-07-28]**

Remarks:
The file contains technical information submitted after the application was filed and not included in this specification

**EP 3 214 111 B1**

## Description

TECHNICAL FIELD

This disclosure relates to a method for producing a rubber composition, a rubber composition, and a tire.

BACKGROUND

Rubber compositions used in tires are expected to display various aspects of performance such as low heat generation in order to improve vehicle fuel efficiency, good abrasion resistance in order to extend tire life, and running performance on a dry road surface, wet road surface, and/or icy and snowy road surface.

A known method for producing a rubber composition having low heat generation includes a first kneading step in which a first mixture containing a rubber component, a filler, a silane coupling agent, and a vulcanization accelerator is prepared and kneaded to produce a preliminary composition, and a second kneading step in which a second mixture is prepared by adding a vulcanizing agent to the preliminary composition and is kneaded to produce a rubber composition (for example, refer to PTL 1).

According to this method for producing a rubber composition, addition of the vulcanization accelerator in the first kneading step before addition of the vulcanizing agent in the second kneading step can facilitate a reaction between the silane coupling agent and the filler (for example, silica as an inorganic filler) and can raise the activity of the silane coupling agent.

CITATION LIST

Patent Literature

PTL 1: WO 2012/043853 A1

SUMMARY

(Technical Problem)

On the other hand, there is also demand for balanced improvement of ice and snow performance, wet performance, and abrasion resistance of tires. Accordingly, objectives of the present disclosure are (i) to provide a method for producing a rubber composition through which a rubber composition capable of providing a tire with a good balance of ice and snow performance, wet performance, and abrasion resistance can be produced, (ii) to provide a rubber composition capable of providing a tire with a good balance of ice and snow performance, wet performance, and abrasion resistance, and (iii) to provide a tire having a good balance of ice and snow performance, wet performance, and abrasion resistance.

(Solution to Problem)

A presently disclosed method for producing a rubber composition containing: 100 parts by mass of a rubber component (A) including polybutadiene rubber and at least 50 mass% of a styrene-butadiene copolymer rubber; a filler (B) including 80 parts by mass to 100 parts by mass of silica relative to 100 parts by mass of rubber and carbon black, wherein the carbon black constitutes no greater than 20 mass% of the filler (B); a silane coupling agent (C); 7 parts by mass to 20 parts by mass of a thermoplastic resin (D); at least one compound (E) selected from guanidines, sulfenamides, and thiazoles; an organic acid compound (F); and a vulcanizing agent (G), comprises kneading the rubber composition over a plurality of stages, wherein the kneading includes: a first kneading stage of kneading 100 parts by mass of the rubber component (A), the filler (B) including at least 80 parts by mass of silica, the silane coupling agent (C), at least 7 parts by mass of the thermoplastic resin (D), all or some of the compound (E), and all or some of the organic acid compound (F); and a second kneading stage of, after the first kneading stage, kneading the vulcanizing agent (G) and a kneaded product prepared through kneading in the first kneading stage.

(Advantageous Effect)

According to the present disclosure, it is possible to (i) provide a method for producing a rubber composition through which a rubber composition capable of providing a tire with a good balance of ice and snow performance, wet performance, and abrasion resistance can be produced, (ii) provide a rubber composition capable of providing a tire with a good balance of ice and snow performance, wet performance, and abrasion resistance, and (iii) provide a tire having a good balance of ice and snow performance, wet performance, and abrasion resistance.

BRIEF DESCRIPTION OF THE DRAWING

In the accompanying drawing,

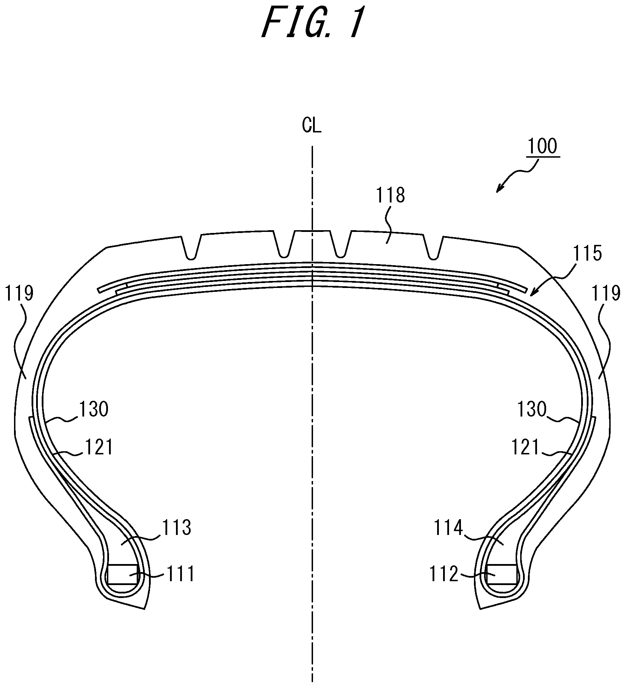

FIG. 1 is a tire width direction cross-sectional view of a tire according to one disclosed embodiment.

DETAILED DESCRIPTION

The following provides an illustrative and detailed description of an embodiment of the presently disclosed method for producing a rubber composition and the presently disclosed rubber composition.

(Method for producing rubber composition and rubber composition)

The presently disclosed method for producing a rubber composition includes at least a kneading process and may include other processes, such as a drying process, as necessary.

The presently disclosed rubber composition produced by the presently disclosed method for producing a rubber composition contains at least a rubber component (A), a filler (B), a silane coupling agent (C), a thermoplastic resin (D), a compound (E), an organic acid compound (F), and a vulcanizing agent (G), and may contain an oil (H) and other components as necessary.

This configuration enables a tire in which the rubber composition is used to be provided with a good balance of ice and snow performance, wet performance, and abrasion resistance.

<Kneading process>

The kneading process is a process in which the rubber composition is kneaded over a plurality of stages. The kneading process includes at least a first kneading stage and a second kneading stage, and may further include an intermediate kneading stage between the first kneading stage and the second kneading stage, and other kneading stages as necessary.

-First kneading stage-

In the first kneading stage, 100 parts by mass of the rubber component (A), the filler (B) including at least 80 parts by mass of silica, the silane coupling agent (C) (for example, at least 2 parts by mass), at least 7 parts by mass of the thermoplastic resin (D), all or some of the compound (E), and all or some of the organic acid compound (F) are kneaded. A preliminary composition is prepared through this kneading.

It should be noted that the preliminary composition prepared in the first kneading stage does not contain the vulcanizing agent (G). Furthermore, the preliminary composition prepared in the first kneading stage contains silica as the filler (B), and thus does not contain only fillers other than silica as the filler (B).

The maximum temperature of the rubber composition in the first kneading stage can be selected as appropriate depending on the objective without any specific limitations and is preferably 120°C to 190°C, more preferably 130°C to 175°C, and particularly preferably 140°C to 170°C from a viewpoint of more favorably raising the coupling activity of the silane coupling agent (C).

The kneading time in the first kneading stage can be selected as appropriate depending on the objective without any specific limitations.

In a situation in which the first kneading stage is carried out by kneading the rubber component (A), the filler (B) including silica, and the silane coupling agent (C), and subsequently adding the thermoplastic resin (D), the compound (E), and the organic acid compound (F) and performing further kneading, it is preferable that the time elapsing from after addition of the rubber component (A), the filler (B) including silica, and the silane coupling agent (C) until addition of the thermoplastic resin (D), the compound (E), and the organic acid compound (F) partway through the first kneading stage is 90 seconds to 210 seconds. This time is more preferably 100 seconds to 180 seconds, even more preferably 120 seconds to 150 seconds, and particularly preferably 125 seconds to 145 seconds.

When this time is at least 90 seconds, the reaction between the filler (B) and the silane coupling agent (C) can sufficiently progress. However, when this time exceeds 210 seconds, the reaction between the filler (B) and the silane coupling agent (C) has already sufficiently progressed and no further beneficial effect is likely to obtained. Therefore, the upper limit for this time is preferably set as 210 seconds.

-Second kneading stage-

After the first kneading stage, the vulcanizing agent (G) is kneaded with the kneaded product (preliminary composition) prepared through kneading in the first kneading stage. This kneading yields the rubber composition.

Some of the thermoplastic resin (D), the compound (E), and/or the organic acid compound (F) may be added in the second kneading stage. Herein, stearic acid may constitute at least 50% of the organic acid compound (F) and some of this stearic acid may be added in the second kneading stage.

An appropriate amount of a vulcanization accelerator may be added as the compound (E) in the second kneading stage to accelerate vulcanization as desired.

The maximum temperature of the rubber composition in the second kneading stage can be selected as appropriate depending on the objective without any specific limitations and is preferably 60°C to 140°C, more preferably 80°C to 120°C, and particularly preferably 100°C to 120°C.

The kneading time in the second kneading stage can be selected as appropriate depending on the objective without any specific limitations and is preferably 10 seconds to 20 minutes, more preferably 10 seconds to 10 minutes, and particularly preferably 20 seconds to 5 minutes.

In transition from the first kneading stage to the second kneading stage or from a subsequently described intermediate kneading stage to the second kneading stage, it is preferable that the transition to the second kneading stage is made after the temperature of the rubber composition is lowered by at least 10°C from the temperature thereof straight after completion of kneading in the first kneading stage or the intermediate kneading stage.

-Intermediate kneading stage-

The presently disclosed method for producing a rubber composition may include an intermediate kneading stage between the first kneading stage and the second kneading stage, as necessary, in which the preliminary composition prepared in the first kneading stage is further kneaded.

However, it should be noted that the vulcanizing agent (G) is not added in the intermediate kneading stage.

The maximum temperature of the rubber composition in the intermediate kneading stage can be selected as appropriate depending on the objective without any specific limitations and is preferably 120°C to 190°C, more preferably 130°C to 175°C, and particularly preferably 140°C to 170°C.

The kneading time in the intermediate kneading stage can be selected as appropriate depending on the objective without any specific limitations and is preferably 10 seconds to 20 minutes, more preferably 10 seconds to 10 minutes, and particularly preferably 30 seconds to 5 minutes.

A mixer used in the first kneading stage, the intermediate kneading stage, and the second kneading stage can be selected as appropriate depending on the objective without any specific limitations and may be, for example, a single-screw kneading extruder; a multi-screw kneading extruder (continuous kneading device); a mixer having meshing or non-meshing rotating rotors such as a Banbury mixer, an Intermix, or a kneader; or a roller (batch kneading device).

Conditions adopted in the kneading such as the rotor rotational speed, the ram pressure, the kneading temperature, the kneading time, and the type of kneading device can be selected as appropriate.

<Rubber component (A)>

So long as the rubber component (A) used in the presently disclosed rubber composition includes polybutadiene rubber (BR) and at least 50 mass% of a styrene-butadiene copolymer rubber (SBR), any diene-based rubber may be used without any specific limitations.

Synthetic rubbers other than the polybutadiene rubber and styrene-butadiene copolymer rubber can be selected as appropriate depending on the objective without any specific limitations and examples thereof include synthetic diene-based polymer rubbers such as polyisoprene rubber (IR), butyl rubber (IIR), and ethylene-propylene-diene terpolymer rubber (EPDM). One of such synthetic rubbers may be used individually, or two or more of such synthetic rubbers may be used in combination.

The content of the styrene-butadiene copolymer rubber (SBR) in the rubber component (A) can be selected as appropriate depending on the objective without any specific limitations other than being at least 50 mass%. However, the content of the styrene-butadiene copolymer rubber (SBR) is preferably 50 mass% to 60 mass%, more preferably 60 mass% to 70 mass%, and particularly preferably 70 mass% to 80 mass%.

A content of at least 50 mass% enables superior wet performance to be retained. Moreover, it is beneficial for the content to be in the preferable range, the more preferable range, or the particularly preferable range set forth above for the same reason.

<Filler (B)>

The filler (B) used in the presently disclosed rubber composition can be selected as appropriate depending on the objective without any specific limitations other than including the prescribed amount of silica and carbon black..

Herein, the ice and snow performance of a tire are improved because the filler (B) includes carbon black and the carbon black constitutes no greater than 20 mass% of the filler (B).

-Silica-

The type of silica can be selected as appropriate depending on the objective without any specific limitations and examples thereof include wet silica (hydrous silica), dry silica (anhydrous silica), and colloidal silica. One of such types of silica may be used individually, or two or more of such types of silica may be used in combination.

The amount of the silica that is compounded can be selected as appropriate depending on the objective without any specific limitations other than being 80 parts by mass to 1000 parts by mass relative to 100 parts by mass of the rubber component (A).

A compounded amount of 80 parts by mass to 130 parts by mass enables improvement of wet performance. Moreover, it is beneficial for the compounded amount to be in the preferable range, the more preferable range, or the particularly preferable range set forth above for the same reason.

The BET specific surface area of the silica can be selected as appropriate depending on the objective without any specific limitations and is preferably 40 $m^2/g$ to 350 $m^2/g$, more preferably 80 $m^2/g$ to 350 $m^2/g$, even more preferably greater than 130 $m^2/g$ and no greater than 350 $m^2/g$, and particularly preferably 135 $m^2/g$ to 350 $m^2/g$.

A BET specific surface area of 40 $m^2/g$ to 350 $m^2/g$ enables a good balance of rubber reinforcement properties of the silica and dispersibility of the silica in the rubber component. Moreover, it is beneficial for the BET specific surface area to be in the more preferable range, the even more preferable range, or the particularly preferable range set forth above from a viewpoint of more efficiently achieving a good balance of rubber reinforcing properties of the silica and dispersibility of the silica in the rubber component.

The silica can be selected as appropriate depending on the objective without any specific limitations and may be a commercially available product such as the product "Nipsil AQ" (produced by Tosoh Silica Corporation; BET specific surface area = 205 $m^2/g$), the product "Nipsil KQ" (produced by Tosoh Silica Corporation; BET specific surface area = 240 $m^2/g$), or the product "Ultrasil VN3" (produced by Degussa; BET specific surface area = 175 $m^2/g$).

The term "BET specific surface area" refers to a value that is measured in accordance with ISO 5794/1.

-Carbon black-

The carbon black enables an effect of lowering electrical resistance of the rubber composition and thereby preventing charging of the rubber composition.

The carbon black can be selected as appropriate depending on the objective without any specific limitations and may be, for example, SAF, ISAF, IISAF, N339, HAF, FEF, GPF, or SRF grade carbon black having high, medium, or low structure. One of such types of carbon black may be used individually, or two or more of such types of carbon black may be used in combination.

Of these carbon blacks, SAF, ISAF, IISAF, N339, HAF, and FEF grade carbon blacks are preferable.

Note that in the present disclosure, the carbon black is not considered to be included among inorganic fillers.

The nitrogen adsorption specific surface area ($N_2SA$) of the carbon black can be selected as appropriate depending on the objective without any specific limitations and is preferably 30 $m^2/g$ to 250 $m^2/g$.

The term "nitrogen adsorption specific surface area ($N_2SA$)" refers to a value that is measured in accordance with JIS K 6217-2:2001.

The content of the carbon black can be selected as appropriate depending on the objective without any specific limitations and is no greater than 20 mass% of the filler (B), more preferably 15 mass% to 20 mass% of the filler (B), and particularly preferably 10 mass% to 15 mass% of the filler (B).

A compounded amount of no greater than 20 mass% enables improvement of rolling resistance. Moreover, it is beneficial for the compounded amount to be in the more preferable range or the particularly preferable range set forth above for the same reason.

-Inorganic filler other than silica-

The inorganic filler other than silica can be selected as appropriate depending on the objective without any specific limitations and examples thereof include inorganic compounds represented by formula (I), shown below.

$$dM^1 \cdot xSiO_y \cdot zH_2O \cdots \qquad (I)$$

[In formula (I), $M^1$ is at least one selected from (i) a metal selected from the group consisting of aluminum, magnesium, titanium, calcium, and zirconium, (ii) an oxide of any of these metals, (iii) a hydroxide of any of these metals, (iv) a hydrate of any of these metals, and (v) a carbonate of any of these metals; d is an integer of 1 to 5; x is an integer of 0 to 10; y is an integer of 2 to 5; and z is an integer of 0 to 10. When x and z are both 0, formula (I) represents at least one metal selected from aluminum, magnesium, titanium, calcium, and zirconium, a metal oxide, or a metal hydroxide.]

Examples of inorganic compounds represented by formula (I) that can be selected as appropriate depending on the objective without any specific limitations include alumina ($Al_2O_3$) such as $\gamma$-alumina and $\alpha$-alumina; alumina-hydrate ($Al_2O_3 \cdot H_2O$) such as boehmite and diaspore; aluminum hydroxide [$Al(OH)_3$] such as gibbsite and bayerite; aluminum carbonate [$Al_2(CO_3)_2$]; magnesium hydroxide [$Mg(OH)_2$]; magnesium oxide (MgO); magnesium carbonate ($MgCO_3$); talc ($3MgO \cdot 4SiO_2 \cdot H_2O$); attapulgite ($5MgO \cdot 8SiO_2 \cdot 9H_2O$); titanium white ($TiO_2$); titanium black ($TiO_{2n-1}$); calcium oxide (CaO); calcium hydroxide [$Ca(OH)_2$]; aluminum magnesium oxide ($MgO \cdot Al_2O_3$); clay ($Al_2O_3 \cdot 2SiO_2$); kaolin ($Al_2O_3 \cdot 2SiO_2 \cdot 2H_2O$); pyrophyllite ($Al_2O_3 \cdot 4SiO_2 \cdot H_2O$); bentonite ($Al_2O_3 \cdot 4SiO_2 \cdot 2H_2O$); aluminum silicate ($Al_2SiO_5$, $Al_4 \cdot 3SiO_4 \cdot 5H_2O$, etc.); magnesium silicate ($Mg_2SiO_4$, $MgSiO_3$, etc.); calcium silicate ($Ca_2.SiO_4$, etc.); aluminum calcium silicate ($Al_2O_3 \cdot CaO \cdot 2SiO_2$, etc.); magnesium calcium silicate ($CaMgSiO_4$); calcium carbonate ($CaCO_3$); zirconium oxide ($ZrO_2$); zirconium hydroxide ($ZrO(OH)_2 \cdot nH_2O$); zirconium carbonate ($Zr(CO_3)_2$); and crystalline aluminosilicate salts containing a charge-correcting hydrogen, alkali metal, or alkaline earth metal, such as various types of zeolites. One of such inorganic compounds may be used individually, or two or more of such inorganic compounds may be used in combination.

Of these inorganic compounds, an inorganic compound for which $M^1$ in formula (I) is at least one selected from aluminum, oxides of aluminum, hydroxides of aluminum, hydrates thereof, and carbonates of aluminum is preferable.

The average particle diameter of the inorganic compound can be selected as appropriate depending on the objective without any specific limitations and is preferably 0.01 $\mu$m to 10 $\mu$m, and more preferably 0.05 $\mu$m to 5.0 $\mu$m from a viewpoint of, for example, achieving a good balance of kneading operability, abrasion resistance, and wet gripping performance.

The amount of the filler (B) that is compounded can be selected as appropriate depending on the objective without any specific limitations other than being at least 80 parts by mass relative to 100 parts by mass of the rubber component (A). However, the amount of the filler (B) that is compounded relative to 100 parts by mass of the rubber component (A) is preferably 80 parts by mass to 150 parts by mass, more preferably 85 parts by mass to 130 parts by mass, and particularly preferably 95 parts by mass to 120 parts by mass.

A compounded amount of at least 80 parts by mass enables improvement of wet performance. Moreover, it is beneficial for the compounded amount to be in the preferable range, the more preferable range, or the particularly preferable range set forth above from a viewpoint of improving wet performance.

<Silane coupling agent (C)>

Use of the silane coupling agent (C) enables even better operability during rubber processing and can provide a tire with even better abrasion resistance.

The silane coupling agent (C) used in the presently disclosed rubber composition can be selected as appropriate depending on the objective without any specific limitations and examples thereof include compounds represented by formula (II), shown below, and compounds represented by formula (III), shown below. One of such compounds may be used individually, or two or more of such compounds may be used in combination.

Of these compounds, compounds represented by formula (II) are particularly preferable. The reason for this is that the compound (E) described further below can easily activate a polysulfide bond moiety that reacts with the rubber component (A).

$$(R^1O)_{3-p}(R^2)_p Si-R^3-S_a-R^3-Si(OR^1)_{3-r}(R^2)_r \cdots \qquad (II)$$

[In formula (II), $R^1$ is a linear, cyclic, or branched alkyl group having a carbon number of 1 to 8, a linear or branched alkoxyalkyl group having a carbon number of 2 to 8, or a hydrogen atom, and each $R^1$ may be the same or different in a situation in which more than one $R^1$ is present; $R^2$ is a linear, cyclic, or branched alkyl group having a carbon number of 1 to 8, and each $R^2$ may be the same or different in a situation in which more than one $R^2$ is present; and $R^3$ is a linear or branched alkylene group having a carbon number of 1 to 8, and each $R^3$ may be the same or different in a situation in which more than one $R^3$ is present. Moreover, a has an average value of 2 to 6, and p and r each have an average value of 0 to 3 and may be the same or different to one another. However, p and r are not both 3.]

$$(R^4O)_{3-s}(R^5)_s Si-R^3-S_k-R^7-S_k-R^6-Si(OR^4)_{3-t}(R^3)_t \cdots \qquad (III)$$

[In formula (III), $R^4$ is a linear, cyclic, or branched alkyl group having a carbon number of 1 to 8, a linear or branched alkoxyalkyl group having a carbon number of 2 to 8, or a hydrogen atom, and each $R^4$ may be the same or different in a situation in which more than one $R^4$ is present; $R^5$ is a linear, cyclic, or branched alkyl group having a carbon number of 1 to 8, and each $R^5$ may be the same or different in a situation in which more than one $R^5$ is present; and $R^6$ is a linear or branched alkylene group having a carbon number of 1 to 8, and each $R^6$ may be the same or different in a situation in which more than one $R^6$ is present. Moreover, $R^7$ is a divalent group selected from general formulae $-S-R^8-S-$, $-R^9-S_{m1}-R^{10}-$, and $-R^{11}-S_{m2}-R^{12}-S_{m3}-R^{13}-$ ($R^8$ to $R^{13}$ are each a divalent hydrocarbon group having a carbon number of 1 to 20, a divalent aromatic group, or a divalent organic group including a heteroatom other than sulfur or oxygen; and m1, m2, and m3 each have an average value of at least 1 and less than 4, and may be the same or different to one another); each k has an average value of 1 to 6 and may be the same or different to one another; and s and t each have an average value of 0 to 3. However, s and t are not both 3.]

Specific examples of the silane coupling agent (C) represented by formula (II) that can be selected as appropriate depending on the objective without any specific limitations include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilyl propyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, and bis(2-monoethoxydimethylsilylethyl)disulfide.

Specific examples of the silane coupling agent (C) represented by formula (III) that can be selected as appropriate depending on the objective without any specific limitations include those having an average compositional formula $(CH_3CH_2O)_3Si-(CH_2)_3-S_2-(CH_2)_6-S_2-(CH_2)_3-Si(OCH_2CH_3)_3$, an average compositional formula $(CH_3CH_2O)_3Si-(CH_2)_3-S_2-(CH_2)_{10}-S_2-(CH_2)_3-Si(OCH_2CH_3)_3$, an average compositional formula $(CH_3CH_2O)_3Si-(CH_2)_3-S_3-(CH_2)_6-S_3-(CH_2)_3-Si(OCH_2CH_3)_3$, an average compositional formula $(CH_3CH_2O)_3Si-(CH_2)_3-S_4-(CH_2)_6-S_4-(CH_2)_3-Si(OCH_2CH_3)_3$, an average compositional formula $(CH_3CH_2O)_3Si-(CH_2)_3-S-(CH_2)_6-S_2-(CH_2)_6-S-(CH_2)_3-Si(OCH_2CH_3)_3$, an average compositional formula $(CH_3CH_2O)_3Si-(CH_2)_3-S-(CH_2)_6-S_{2.5}-(CH_2)_6-S-(CH_2)_3-Si(OCH_2CH_3)_3$, an average compositional formula $(CH_3CH_2O)_3Si-(CH_2)_3-S-(CH_2)_6-S_3-(CH_2)_6-S-(CH_2)_3-Si(OCH_2CH_3)_3$, an average compositional formula $(CH_3CH_2O)_3Si-(CH_2)_3-S-(CH_2)_6-S_4-(CH_2)_6-S-(CH_2)_3-Si(OCH_2CH_3)_3$, an average compositional formula $(CH_3CH_2O)_3Si-(CH_2)_3-S-(CH_2)_{10}-S_2-(CH_2)_{10}-S-(CH_2)_3-Si(OCH_2CH_3)_3$, an average compositional formula $(CH_3CH_2O)_3Si-(CH_2)_3-S_4-(CH_2)_6-S_4-(CH_2)_6-S_4-(CH_2)_3-Si(OCH_2CH_3)_3$, an average compositional formula $(CH_3CH_2O)_3Si-(CH_2)_3-S_2-(CH_2)_6-S_2-(CH_2)_6-S_2-(CH_2)_3-Si(OCH_2CH_3)_3$, and an average compositional formula $(CH_3CH_2O)_3Si-(CH_2)_3-S-(CH_2)_6-S_2-(CH_2)_6-S_2-(CH_2)_6-S-(CH_2)_3-Si(OCH_2 CH_3)_3$.

The amount of the silane coupling agent (C) that is compounded relative to 100 parts by mass of the rubber component (A) can be selected as appropriate depending on the objective without any specific limitations. However, the compounded amount relative to 100 parts by mass of the rubber component (A) is preferably 2 parts by mass to 15 parts by mass, more preferably 5 parts by mass to 15 parts by mass, even more preferably 6 parts by mass to 12 parts by mass, and particularly preferably 8 parts by mass to 10 parts by mass.

A compounded amount of 2 parts by mass to 15 parts by mass can ensure dispersion of the silica. Moreover, it is beneficial for the compounded amount to be in the more preferable range, the even more preferable range, or the particularly preferable range set forth above from a viewpoint of ensuring dispersion of the silica.

<Thermoplastic resin (D)>

Use of the thermoplastic resin (D) enables improvement of wet performance.

The thermoplastic resin (D) used in the presently disclosed rubber composition can be selected as appropriate depending on the objective without any specific limitations and examples thereof include a C5 resin, a C5 and C9 containing copolymer resin, a terpene resin, a terpene-aromatic compound resin, a C9 resin, a rosin resin, an alkyl phenolic resin, a coumarone-indene resin, a xylene resin, and a vinyltoluene-$\alpha$-methylstyrene copolymer.

The term "C5 resin" refers to a C5 synthetic petroleum resin. The C5 resin is a solid polymer obtained by using a Friedel-Crafts catalyst, such as $AlCl_3$ or $BF_3$, to polymerize a C5 fraction.

Specific examples of the C5 resin that can be selected as appropriate depending on the objective without any specific limitations include a copolymer having isoprene as a main component, a copolymer having cyclopentadiene as a main component, a copolymer having 1,3-pentadiene as a main component, a copolymer having 1-pentene as a main component, a copolymer of 2-pentene and dicyclopentadiene, and a polymer having 1,3-pentadiene as a main component.

The term "C5 and C9 containing copolymer resin" refers to a C5 and C9 synthetic petroleum resin. The C5 and C9 containing copolymer resin is a solid polymer obtained by using a Friedel-Crafts catalyst, such as AlCl$_3$ or BF$_3$, to polymerize a C5 to C11 fraction.

Specific examples of the C5 and C9 containing copolymer resin that can be selected as appropriate depending on the objective without any specific limitations include a copolymer having styrene as a main component, a copolymer having vinyltoluene as a main component, a copolymer having α-methylstyrene as a main component, and a copolymer having indene as a main component.

The terpene resin is a solid resin obtained by using a Friedel-Crafts catalyst to polymerize terpene oil obtained at the same time as rosin from a tree of the genus *Pinus*, or a polymerization component isolated therefrom.

Specific examples of the terpene resin that can be selected as appropriate depending on the objective without any specific limitations include β-pinene resin and α-pinene resin.

Specific examples of the terpene-aromatic compound resin that can be selected as appropriate depending on the objective without any specific limitations include terpene phenolic resin.

The terpene phenolic resin can be obtained by causing a terpene and various phenols to react using a Friedel-Crafts catalyst, or by further condensing the resultant product with formalin.

The terpene used as a raw material for the terpene-aromatic compound resin can be selected as appropriate depending on the objective without any specific limitations and examples thereof include monoterpene hydrocarbons such as α-pinene and limonene. One of such terpenes may be used individually, or two or more of such terpenes may be used in combination. Of these terpenes, α-pinene is particularly preferable.

The term "C9 resin" refers to a C9 synthetic petroleum resin. The C9 resin is a solid polymer obtained by using a Friedel-Crafts catalyst, such as AlCl$_3$ or BF$_3$, to polymerize a C9 fraction.

Specific examples of the C9 resin that can be selected as appropriate depending on the objective without any specific limitations include a copolymer having indene as a main component, a copolymer having methylindene as a main component, a copolymer having α-methylstyrene as a main component, and a copolymer having vinyltoluene as a main component.

The rosin resin can be selected as appropriate depending on the objective without any specific limitations and may be natural resin rosin, modified rosin, a rosin derivative, or a modified rosin derivative. Examples include gum rosin, tall oil resin, or wood rosin contained in raw rosin or tall oil; polymerized rosin or partially hydrogenated rosin thereof; glycerin ester rosin, partially hydrogenated rosin thereof, or completely hydrogenated rosin thereof; and pentaerythritol ester rosin, partially hydrogenated rosin thereof, or polymerized rosin thereof.

The alkyl phenolic resin can be selected as appropriate depending on the objective without any specific limitations and examples thereof include alkylphenol-acetylene resins such as p-tert-butylphenol-acetylene resin, and low degree of polymerization alkylphenol-formaldehyde resins.

The amount of the thermoplastic resin (D) that is compounded can be selected as appropriate depending on the objective without any specific limitations other than being 7 parts by mass to 20 parts by mass relative to 100 parts by mass of the rubber component (A). However, the compounded amount relative to 100 parts by mass of the rubber component (A) is preferably 8 parts by mass to 19 parts by mass, more preferably 9 parts by mass to 16 parts by mass, and particularly preferably 10 parts by mass to 15 parts by mass.

A compounded amount of 8 parts by mass to 19 parts by mass enables improvement of wet performance. Moreover, it is beneficial for the compounded amount to be in the preferable range, the more preferable range, or the particularly preferable range set forth above from a viewpoint of improving wet performance.

<Compound (E)>

Use of the compound (E) can raise the activity of the silane coupling agent (C).

The compound (E) used in the presently disclosed rubber composition can be selected as appropriate depending on the objective without any specific limitations other than being at least one selected from guanidines, sulfenamides, and thiazoles.

Examples of guanidines that can be selected as appropriate depending on the objective without any specific limitations include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. One of such guanidines may be used individually, or two or more of such guanidines may be used in combination.

Of these guanidines, 1,3-diphenylguanidine, 1,3-di-o-tolylguanidine, and 1-o-tolylbiguanide are preferable, and 1,3-diphenylguanidine is more preferable in terms of having high reactivity.

Examples of sulfenamides that can be selected as appropriate depending on the objective without any specific limitations include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dioctyl-2-benzothiazolylsulfenamide, N,N-di-2-ethylhexylbenzothiazolylsulfenamide, N,N-didodecyl-2-benzothiazolylsulfenamide, and N,N-distearyl-2-benzothiazolylsulfenamide. One of such sulfenamides may be used individually, or two or more of such sulfenamides may be used in combination.

Of these sulfenamides, N-cyclohexyl-2-benzothiazolylsulfenamide and N-tert-butyl-2-benzothiazolylsulfenamide are preferable in terms of having high reactivity.

Examples of thiazoles that can be selected as appropriate depending on the objective without any specific limitations include 2-mercaptobenzothiazole, di-2-benzothiazolyl disulfide, zinc salt of 2-mercaptobenzothiazole, cyclohexylamine salt of 2-mercaptobenzothiazole, 2-(N,N-diethylthiocarbamoylthio)benzothiazole, 2-(4'-morpholinodithio)benzothiazole, 4-methyl-2-mercaptobenzothiazole, di(4-methyl-2-benzothiazolyl) disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, and 6-amino-2-mercaptobenzothiazole. One of such thiazoles may be used individually, or two or more of such thiazoles may be used in combination.

Of these thiazoles, 2-mercaptobenzothiazole and di-2-benzothiazolyl disulfide are preferable in terms of having high reactivity.

The amount of the compound (E) that is compounded can be selected as appropriate depending on the objective without any specific limitations. However, the compounded amount relative to 100 parts by mass of the rubber component (A) is preferably 0.4 parts by mass to 3.0 parts by mass, more preferably 0.6 parts by mass to 2.0 parts by mass, and particularly preferably 0.8 parts by mass to 1.5 parts by mass.

A compounded amount of 0.4 parts by mass to 3.0 parts by mass enables improvement of activity. Moreover, it is beneficial for the compounded amount to be in the more preferable range or the particularly preferable range set forth above from a viewpoint of improving activity.

<Organic acid compound (F)>

Use of the organic acid compound (F) can accelerate vulcanization.

The organic acid compound (F) used in the presently disclosed rubber composition can be selected as appropriate depending on the objective without any specific limitations and examples thereof include saturated and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, and nervonic acid; resin acids such as rosin acid and modified rosin acid; and esters of saturated fatty acids, unsaturated fatty acids, and resin acids. One of such organic acid compounds may be used individually, or two or more of such organic acid compounds may be used in combination.

It is preferable that stearic acid constitutes at least 50% of the organic acid compound (F).

Note that in a situation in which a styrene-butadiene copolymer obtained through emulsion polymerization is used as the rubber component (A), rosin acid (inclusive of modified rosin acid) or a fatty acid originally contained therein may be used as the organic acid compound (F). A styrene-butadiene copolymer obtained through emulsion polymerization normally contains rosin acid or the like since an emulsifier normally contains rosin acid or the like.

The amount of the organic acid compound (F) that is compounded can be selected as appropriate depending on the objective without any specific limitations and is preferably 0.5 parts by mass to 2.0 parts by mass relative to 100 parts by mass of the rubber component (A).

Addition of the organic acid compound (F) in the first kneading stage, prior to the second kneading stage in which the vulcanizing agent (G) described below is added, can facilitate the reaction between the silane coupling agent and the filler (for example, silica as an inorganic filler) and raise the activity of the silane coupling agent.

<Vulcanizing agent (G)>

The vulcanizing agent (G) used in the presently disclosed rubber composition can be selected as appropriate depending on the objective without any specific limitations and may, for example, be sulfur.

The amount of the vulcanizing agent (G) that is compounded can be selected as appropriate depending on the objective without any specific limitations and is preferably 1.0 parts by mass to 2.0 parts by mass relative to 100 parts by mass of the rubber component (A).

<Oil (H)>

Use of the oil (H) enables improvement of processability.

The oil (H) that may be used in the presently disclosed rubber composition as necessary can be selected as appropriate depending on the objective without any specific limitations and examples thereof include paraffinic oils, naphthenic oils, and aromatic oils.

The amount of the oil (H) that is compounded may be selected as appropriate depending on the objective without any specific limitations. However, the compounded amount relative to 100 parts by mass of the rubber component (A) is preferably at least 40 parts by mass, more preferably 40 parts by mass to 70 parts by mass, even more preferably 42 parts by mass to 65 parts by mass, and particularly preferably 45 parts by mass to 55 parts by mass.

A compounded amount of at least 40 parts by mass can suppress deterioration of processability. Moreover, it is beneficial for the compounded amount to be in the more preferable range, the even more preferable range, or the particularly preferable range set forth above for the same reason.

Herein, ice and snow performance of a tire can be further improved in a situation in which the rubber composition further contains the oil (H) and in which the oil (H) is compounded in an amount of at least 40 parts by mass relative to 100 parts by mass of the rubber component (A).

<Other components>

Other components that may be used in the presently disclosed rubber composition as necessary can be selected as appropriate depending on the objective without any specific limitations and examples thereof include age resistors and softeners. Commercially available products may be used as these other components.

The ratio of the compounded amount (mass) of the silane coupling agent (C) to the compounded amount (mass) of the filler (B) (i.e., compounded amount of silane coupling agent (C)/compounded amount of filler (B)) can be selected as appropriate depending on the objective without any specific limitations. However, this ratio (compounded amount of silane coupling agent (C)/compounded amount of filler (B)) is preferably 0.01 to 0.20, more preferably 0.03 to 0.20, and particularly preferably 0.04 to 0.10.

When this ratio (compounded amount of silane coupling agent (C)/compounded amount of filler (B)) is at least 0.01, an effect of reducing heat generation of the rubber composition can be easily obtained. On the other hand, when this ratio (compounded amount of silane coupling agent (C)/compounded amount of filler (B)) is no greater than 0.20, production cost of the rubber composition can be reduced, making the rubber composition more economically advantageous.

The number of molecules XE of the compound (E) and the number of molecules XF of the organic acid compound (F) in the first kneading stage of the method for producing a rubber composition can be selected as appropriate depending on the objective without any specific limitations and preferably satisfy the following formula (Z). Note that the term "number of molecules" refers to the number of moles.

$$0 \leq XF/XE \leq 1.5 \qquad (Z)$$

The organic acid compound (F) may reduce the effect of raising the activity of the silane coupling agent (C) obtained through addition of the compound (E) in the first kneading stage. However, by including the organic acid compound (F) in the preliminary composition prepared in the first kneading stage such that XF/XE is in the range set forth above, this reduction can be effectively suppressed, and abrasion resistance of a tire produced using the rubber composition according to the disclosed embodiment can be further improved.

The ratio of the number of molecules XE of the compound (E) to the number of molecules XC of the silane coupling agent (C) (i.e., XE/XC) in the first kneading stage of the method for producing a rubber composition can be selected as appropriate depending on the objective without any specific limitations. However, this ratio (XE/XC) is preferably 0.1 to 1.0, more preferably 0.3 to 1.0, and particularly preferably 0.4 to 1.0.

When this ratio (XE/XC) is at least 0.1, sufficient activation of the silane coupling agent (C) can be realized. On the other hand, when this ratio (XE/XC) is no greater than 1.0, influence on the rate of vulcanization can be reduced.

(Tire)

The presently disclosed tire includes a tread in which the previously described rubber composition is used.

The tire can achieve a good balance of ice and snow performance, wet performance, and abrasion resistance.

A tire according to one disclosed embodiment is described with reference to FIG. 1. The tire 100 includes a pair of bead cores 111 and 112, stiffeners 113 and 114, and a carcass ply 121. The stiffeners 113 and 114 extend outward from the bead cores 111 and 112 in a tire radial direction. The carcass ply 121 is folded back outward of the stiffeners 113 and 114 in a tire width direction at the bead cores 111 and 112 such as to form a horseshoe-type tire case shape. A belt 115 composed of a plurality of belt layers is located outward of the carcass ply 121 in the tire radial direction.

A tread 118 is located outward of the belt 115 in the tire radial direction. Moreover, an inner liner 130 that serves as an air permeation prevention layer is located inward of the carcass ply 121. The tread 118 is formed using the presently disclosed rubber composition.

In addition, sidewalls 119 are formed outward of the carcass ply 121 in the tire width direction. The sidewalls 119 may be made from colored rubber.

The method by which the tire is produced can be a conventional method. For example, components normally used in tire production, such as a carcass ply layer, a belt layer, a tread layer, and so forth containing unvulcanized rubber, may be overlapped on a tire molding drum in order, and the drum may be subsequently removed to obtain a green tire. Thereafter, the green tire may be heated and vulcanized in accordance with a standard method to thereby obtain a desired tire (for example, a pneumatic tire).

EXAMPLES

The following provides a more detailed description of the present disclosure through examples. However, the present disclosure is not in any way limited by the following examples.

In the following test examples (examples and comparative examples), the materials shown below were used as rubber composition components.

*1: BR (A); butadiene rubber; high-cis butadiene rubber produced by JSR Corporation; product name "BR01"

*2: SBR (A); emulsion polymerized styrene-butadiene copolymer rubber produced by JSR Corporation; product name "#1500"

*3: Carbon black (B); N220 (ISAF) produced by Asahi Carbon Co., Ltd.; product name "#80"

*4: Silica (B); produced by Tosoh Silica Corporation; product name "Nipsil AQ"; BET specific surface area 205 m$^2$/g

*5: Silane coupling agent (C); bis(3-triethoxysilylpropyl)disulfide (average sulfur chain length: 2.35); silane coupling agent produced by Evonik; product name "Si75®" (Si75 is a registered trademark in Japan, other countries, or both)

*6: C5 and C9 Containing Copolymer Resin (D); produced by Zeon Corporation; product name "QUINTONE® G100B" (QUINTONE is a registered trademark in Japan, other countries, or both)

*7: C5 Resin (D); produced by Exxon Chemical; product name "ESCOREZ® 1102B" (ESCOREZ is a registered trademark in Japan, other countries, or both)

*8: Terpene resin (D); produced by Yasuhara Chemical Co., Ltd.; product name "YS RESIN PX1250"

*9: Oil (H); aromatic oil

*10: Stearic acid (F)

*11: 2-Mercaptobenzothiazole (E); produced by Ouchi Shinko Chemical Industrial Co., Ltd.; product name "NOCCELER M"

*12: N-Cyclohexyl-2-benzothiazolylsulfenamide (E); produced by Ouchi Shinko Chemical Industrial Co., Ltd.; product name "NOCCELER CZ"

*13: 1,3-Diphenylguanidine (E); produced by Sanshin Chemical Industry Co., Ltd.; product name "SANCELER D"

*14: Age resistor 6PPD; N-(1,3-dimethylbutyl)-N'-phenyl-p-phenylenediamine; produced by Ouchi Shinko Chemical Industrial Co., Ltd.; product name "NOCRAC 6C"

*15: Age resistor TMDQ; polymerized 2,2,4-trimethyl-1,2-dihydroquinoline produced by Ouchi Shinko Chemical Industrial Co., Ltd.; product name "SANCELER DM"

*16: Zinc oxide

*17: Vulcanization accelerator MBTS (E); di-2-benzothiazolyl disulfide produced by Sanshin Chemical Industry Co., Ltd.; product name "SANCELER DM"

*18: Vulcanization accelerator TBBS (E); N-tert-butyl-2-benzothiazolylsulfenamide produced by Sanshin Chemical Industry Co., Ltd.; product name "SANCELER NS"

*19: Sulfur (G)

(Examples 1 to 12 and Comparative Examples 1 to 15)

Rubber compositions were prepared according to the formulations and kneading methods shown in Tables 1 and 2. In production of each rubber composition, kneading was performed by a Banbury mixer with a maximum temperature of the rubber composition in the first kneading stage adjusted to 160°C. With the exception of rubber compositions in Comparative Examples 1, 2, 12, and 13, each rubber composition was obtained by, in the first kneading stage, kneading a rubber component (A), a filler (B), a silane coupling agent (C), a thermoplastic resin (D), an organic acid compound (F), and all of an oil (H), and subsequently further adding and kneading a compound (E) (2-mercaptobenzothiazole, N-cyclohexyl-2-benzothiazolylsulfenamide, or 1,3-diphenylguanidine) and, in the second kneading stage, further adding and kneading an organic acid compound (F), an age resistor, zinc oxide, a compound (E), and a vulcanizing agent (G). The performance of each of the rubber compositions was evaluated as follows.

<Performance evaluation>

Size 195/65R15 tires were prepared using the rubber composition in a tread of each of the tires.

Each of the prepared tires was fitted onto an applicable rim stipulated by JATMA standards and was used with a prescribed internal pressure as a pneumatic tire. The tires were fitted onto a vehicle and tests described below in (1) to (3) were carried out to evaluate the performance of the pneumatic tires prepared using the rubber composition.

(1) Icy and snowy road running performance (ice and snow performance) test

A test rider rode the vehicle in various riding styles on an icy and snowy course and subjectively evaluated the running performance of the tires during running. Specifically, an index value serving as a comparative evaluation was calculated for each of Examples 1 to 7, and 12 and Comparative Examples 2 to 7 by taking the evaluation result for Comparative Example 1 to be 100, an index value serving as a comparative evaluation was calculated for Example 8 by taking the evaluation result for Comparative Example 8 to be 100, an index value serving as a comparative evaluation was calculated for Example 9 by taking the evaluation result for Comparative Example 9 to be 100, an index value serving as a comparative evaluation was calculated for Example 10 by taking the evaluation result for Comparative Example 10 to be 100, an index value serving as a comparative evaluation was calculated for Example 11 by taking the evaluation result for Comparative Example 11 to be 100, and an index value serving as a comparative evaluation was calculated for each of Comparative Examples 13 to 15 by taking the evaluation result for Comparative Example 12 to be 100. The evaluation results are shown in Tables 1 and 2. A higher index value indicates that a tire has better ice and snow performance.

(2) Wet road running performance (wet performance) test

A test rider rode the vehicle in various riding styles on a wet course and subjectively evaluated the running performance of the tires during running. Specifically, an index value serving as a comparative evaluation was calculated for each of Examples 1 to 7, and 12 and Comparative Examples 2 to 7 by taking the evaluation result for Comparative Example 1 to be 100, an index value serving as a comparative evaluation was calculated for Example 8 by taking the evaluation result for Comparative Example 8 to be 100, an index value serving as a comparative evaluation was calculated for Example 9 by taking the evaluation result for Comparative Example 9 to be 100, an index value serving as a comparative evaluation was calculated for Example 10 by taking the evaluation result for Comparative Example 10 to be 100, an index value serving as a comparative evaluation was calculated for Example 11 by taking the evaluation result for Comparative Example 11 to be 100, and an index value serving as a comparative evaluation was calculated for each of Comparative Examples 13 to 15 by taking the evaluation result for Comparative Example 12 to be 100. The evaluation results are shown in Tables 1 and 2. A higher index value indicates that a tire has better wet performance.

(3) Abrasion resistance test

A test rider rode the vehicle for 20,000 km on a test course having a paved road surface. The remaining groove depth after running was measured and tire abrasion resistance was evaluated based on this remaining groove depth. Specifically, an index value serving as a comparative evaluation was calculated for each of Examples 1 to 7, and 12 and Comparative Examples 2 to 7 by taking the evaluation result for Comparative Example 1 to be 100, an index value serving as a comparative evaluation was calculated for Example 8 by taking the evaluation result for Comparative Example 8 to be 100, an index value serving as a comparative evaluation was calculated for Example 9 by taking the evaluation result for Comparative Example 9 to be 100, an index value serving as a comparative evaluation was calculated for Example 10 by taking the evaluation result for Comparative Example 10 to be 100, an index value serving as a comparative evaluation was calculated for Example 11 by taking the evaluation result for Comparative Example 11 to be 100, and an index value serving as a comparative evaluation was calculated for each of Comparative Examples 13 to 15 by taking the evaluation result for Comparative Example 12 to be 100. The evaluation results are shown in Tables 1 to 3. A higher index value indicates that a tire has higher abrasion resistance.

Table 1

| | | | | | Comparative Example 1 | Comparative Example 2 | Comparative Example 3 | Example 1 | Example 2 | Example 3 | Example 4 | Example 5 |
|---|---|---|---|---|---|---|---|---|---|---|---|---|
| Formulation | First kneading stage | Rubber component (A) | | BR *1 | 10 | 10 | 10 | 10 | 10 | 10 | 10 | 10 |
| | | | | SBR *2 | 90 | 90 | 90 | 90 | 90 | 90 | 90 | 90 |
| | | Filler (B) | | Carbon black *3 | 10 | 10 | 10 | 10 | 10 | 10 | 10 | 10 |
| | | | | Silica *4 | 100 | 100 | 100 | 100 | 100 | 100 | 100 | 100 |
| | | Silane coupling agent (C) | | Silane coupling agent *5 | 10 | 10 | 10 | 10 | 10 | 10 | 10 | 10 |
| | | Thermoplastic resin (D) | | C5 to C9 Resin *6 | — | 10 | — | 10 | 10 | 10 | — | — |
| | | | | C5 Resin *7 | — | — | — | — | — | — | 10 | — |
| | | | | Terpene resin *8 | — | — | — | — | — | — | — | 10 |
| | | Oil (E) | | Oil *9 | 50 | 50 | 50 | 50 | 50 | 50 | 50 | 50 |
| | | Organic acid compound (F) | | Stearic acid *10 | 1 | 1 | 1 | 1 | 1 | 0.7 | 1 | 1 |
| | | Compound (E) | | 2-Mercaptobenzothiazole *11 | — | — | — | — | — | 0.6 | — | — |
| | | | | N-Cyclohexyl-2-benzothiazolylsulfenamide *12 | — | — | — | — | — | 0.6 | — | — |
| | | | | 1,3-Diphenylguanidine *13 | — | — | 0.6 | 0.6 | — | — | 0.6 | 0.6 |
| | Second kneading stage | Organic acid compound (F) | | Stearic acid *10 | 1 | 1 | 1 | 1 | 1 | 1.3 | 1 | 1 |
| | | Age resistor | | 6PPD *14 | 1 | 1 | 1 | 1 | 1 | 1 | 1 | 1 |
| | | | | TMDQ *15 | 1 | 1 | 1 | 1 | 1 | 1 | 1 | 1 |
| | | Zinc oxide | | Zinc oxide *16 | 2.5 | 2.5 | 2.5 | 2.5 | 2.5 | 2.5 | 2.5 | 2.5 |
| | | Compound (E) | | 1,3-Diphenylguanidine *13 | 0.6 | 0.6 | | | | | | |
| | | | | MBTS *17 | 1 | 1 | 1 | 1 | 1 | 1 | 1 | 1 |
| | | | | TBBS *18 | 0.6 | 0.6 | 0.6 | 0.6 | 0.6 | 0.6 | 0.6 | 0.6 |
| | | Vulcanizing agent (G) | | Sulfur *19 | 1.5 | 1.5 | 1.5 | 1.5 | 1.5 | 1.5 | 1.5 | 1.5 |
| Tire performance | | | | Ice and snow performance | 100 | 92 | 105 | 102 | 101 | 101 | 100 | 100 |
| | | | | Wet performance | 100 | 108 | 100 | 112 | 111 | 112 | 113 | 112 |
| | | | | Abrasion resistance | 100 | 90 | 106 | 102 | 101 | 102 | 102 | 101 |

| | | | | | Comparative Example 4 | Comparative Example 5 | Comparative Example 6 | Comparative Example 7 | Example 6 | Example 7 |
|---|---|---|---|---|---|---|---|---|---|---|
| Formulation | First kneading stage | Rubber component (A) | | BR *1 | 10 | 10 | 10 | 10 | 10 | 10 |
| | | | | SBR *2 | 90 | 90 | 90 | 90 | 90 | 90 |
| | | Filler (B) | | Carbon black *3 | 10 | 10 | 10 | 10 | 10 | 25 |
| | | | | Silica *4 | 75 | 135 | 100 | 100 | 100 | 100 |
| | | Silane coupling agent (C) | | Silane coupling agent *5 | 10 | 10 | 10 | 10 | 10 | 10 |
| | | Thermoplastic resin (D) | | C5 to C9 Resin *6 | 10 | 10 | 5 | 25 | — | — |
| | | | | C5 Resin *7 | — | — | — | — | — | 10 |
| | | | | Terpene resin *8 | — | — | — | — | 10 | — |
| | | Oil (H) | | Oil *9 | 50 | 50 | 50 | 50 | 30 | 50 |
| | | Organic acid compound (F) | | Stearic acid *10 | 1 | 1 | 1 | 1 | 1 | 1 |
| | | Compound (E) | | 2-Mercaptobenzothiazole *11 | — | — | — | — | — | — |
| | | | | N-Cyclohexyl-2-benzothiazolylsulfenamide *12 | — | — | — | — | — | — |
| | | | | 1,3-Diphenylguanidine *13 | 0.6 | 0.6 | 0.6 | 0.6 | 0.6 | 0.6 |
| | Second kneading stage | Organic acid compound (F) | | Stearic acid *10 | 1 | 1 | 1 | 1 | 1 | 1 |
| | | Age resistor | | 6PPD *14 | 1 | 1 | 1 | 1 | 1 | 1 |
| | | | | TMDQ *15 | 1 | 1 | 1 | 1 | 1 | 1 |
| | | Zinc oxide | | Zinc oxide *16 | 2.5 | 2.5 | 2.5 | 2.5 | 2.5 | 2.5 |
| | | Compound (E) | | 1,3-Diphenylguanidine *13 | | | | | | |
| | | | | MBTS *17 | 1 | 1 | 1 | 1 | 1 | 1 |
| | | | | TBBS *18 | 0.6 | 0.6 | 0.6 | 0.6 | 0.6 | 0.6 |
| | | Vulcanizing agent (G) | | Sulfur *19 | 1.5 | 1.5 | 1.5 | 1.5 | 1.5 | 1.5 |
| Tire performance | | | | Ice and snow performance | 102 | 92 | 100 | 96 | 100 | 100 |
| | | | | Wet performance | 100 | 112 | 103 | 108 | 111 | 111 |
| | | | | Abrasion resistance | 92 | 114 | 99 | 90 | 100 | 101 |

Table 2

| | | | | Comparative Example 8 | Example 8 | Comparative Example 9 | Example 9 | Comparative Example 10 | Example 10 |
|---|---|---|---|---|---|---|---|---|---|
| Formulation | First kneading stage | Rubber component (A) | BR *1 | 10 | 10 | 10 | 10 | 45 | 45 |
| | | | SBR *2 | 90 | 90 | 90 | 90 | 55 | 55 |
| | | Filler (B) | Carbon black *3 | 10 | 10 | 10 | 10 | 10 | 10 |
| | | | Silica *4 | 85 | 85 | 125 | 125 | 100 | 100 |
| | | Silane coupling agent (C) | Silane coupling agent *5 | 10 | 10 | 10 | 10 | 10 | 10 |
| | | Thermoplastic resin (D) | C5 to C9 Resin *6 | — | 10 | — | 10 | — | 10 |
| | | | C5 Resin *7 | — | — | — | — | — | — |
| | | | Terpene resin *8 | — | — | — | — | — | — |
| | | Oil (H) | Oil *9 | 50 | 50 | 50 | 50 | 50 | 50 |
| | | Organic acid compound (F) | Stearic acid *10 | 1 | 1 | 1 | 1 | 1 | 1 |
| | | Compound (E) | 2-Mercaptobenzothiazole *11 | — | — | — | — | — | — |
| | | | N-Cyclohexyl-2-benzothiazolylsulfenamide *12 | — | — | — | — | — | — |
| | | | 1,3-Diphenylguanidine *13 | 0.6 | 0.6 | 0.6 | 0.6 | 0.6 | 0.6 |
| | Second kneading stage | Organic acid compound (F) | Stearic acid *10 | 1 | 1 | 1 | 1 | 1 | 1 |
| | | Age resistor | 6PPD *14 | 1 | 1 | 1 | 1 | 1 | 1 |
| | | | TMDQ *15 | 1 | 1 | 1 | 1 | 1 | 1 |
| | | Zinc oxide | Zinc oxide *16 | 2.5 | 2.5 | 2.5 | 2.5 | 2.5 | 2.5 |
| | | Compound (E) | 1,3-Diphenylguanidine *13 | — | — | — | — | — | — |
| | | | MBTS *17 | 1 | 1 | 1 | 1 | 1 | 1 |
| | | | TBBS *18 | 0.6 | 0.6 | 0.6 | 0.6 | 0.6 | 0.6 |
| | Vulcanizing agent (G) | | Sulfur *19 | 1.5 | 1.5 | 1.5 | 1.5 | 1.5 | 1.5 |
| Tire performance | | | Ice and snow performance | 100 | 100 | 100 | 100 | 100 | 101 |
| | | | Wet performance | 100 | 115 | 100 | 111 | 100 | 112 |
| | | | Abrasion resistance | 100 | 99 | 100 | 101 | 100 | 101 |

Example 9 is a reference example, not according to the invention.

| | | | | Comparative Example 11 | Example 11 | Comparative Example 12 | Comparative Example 13 | Comparative Example 14 | Comparative Example 15 |
|---|---|---|---|---|---|---|---|---|---|
| Formulation | First kneading stage | Rubber component (A) | BR *1 | 25 | 25 | 55 | 55 | 55 | 55 |
| | | | SBR *2 | 75 | 75 | 45 | 45 | 45 | 45 |
| | | Filler (B) | Carbon black *3 | 10 | 10 | 10 | 10 | 10 | 10 |
| | | | Silica *4 | 100 | 100 | 100 | 100 | 100 | 100 |
| | | Silane coupling agent (C) | Silane coupling agent *5 | 10 | 10 | 10 | 10 | 10 | 10 |
| | | Thermoplastic resin (D) | C5 to C9 Resin *6 | — | 10 | — | 10 | — | 10 |
| | | | C5 Resin *7 | — | — | — | — | — | — |
| | | | Terpene resin *8 | — | — | — | — | — | — |
| | | Oil (H) | Oil *9 | 50 | 50 | 50 | 50 | 50 | 50 |
| | | Organic acid compound (F) | Stearic acid *10 | 1 | 1 | 1 | 1 | 1 | 1 |
| | | Compound (E) | 2-Mercaptobenzothiazole *11 | — | — | — | — | — | — |
| | | | N-Cyclohexyl-2-benzothiazolylsulfenamide *12 | — | — | — | — | — | — |
| | | | 1,3-Diphenylguanidine *13 | 0.6 | 0.6 | — | — | 0.6 | 0.6 |
| | Second kneading stage | Organic acid compound (F) | Stearic acid *10 | 1 | 1 | 1 | 1 | 1 | 1 |
| | | Age resistor | 6PPD *14 | 1 | 1 | 1 | 1 | 1 | 1 |
| | | | TMDQ *15 | 1 | 1 | 1 | 1 | 1 | 1 |
| | | Zinc oxide | Zinc oxide *16 | 2.5 | 2.5 | 2.5 | 2.5 | 2.5 | 2.5 |
| | | Compound (E) | 1,3-Diphenylguanidine *13 | — | — | 0.6 | — | — | — |
| | | | MBTS *17 | 1 | 1 | 1 | 1 | 1 | 1 |
| | | | TBBS *18 | 0.6 | 0.6 | 0.6 | 0.6 | 0.6 | 0.6 |
| | Vulcanizing agent (G) | | Sulfur *19 | 1.5 | 1.5 | 1.5 | 1.5 | 1.5 | 1.5 |
| Tire performance | | | Ice and snow performance | 100 | 101 | 100 | 96 | 102 | 98 |
| | | | Wet performance | 100 | 116 | 100 | 109 | 100 | 108 |
| | | | Abrasion resistance | 100 | 101 | 100 | 94 | 102 | 96 |

Table 3

| | | | | Comparative Example 1 | Example 1 | Example 12 |
|---|---|---|---|---|---|---|
| Formulation | First kneading stage | Rubber component (A) | BR*1 | 10 | 10 | 10 |
| | | | SBR*2 | 90 | 90 | 90 |
| | | Filler (B) | Carbon black *3 | 10 | 10 | 10 |
| | | | Silica *4 | 100 | 100 | 100 |
| | | Silane coupling agent (C) | Silane coupling agent *5 | 10 | 10 | 10 |
| | | Thermoplastic resin (D) | C5 to C9 Resin *6 | - | 10 | 20 |
| | | | C5 Resin *7 | - | - | - |
| | | | Terpene resin *8 | - | - | - |
| | | Oil (H) | Oil *9 | 50 | 50 | 50 |
| | | Organic acid compound (F) | Stearic acid *10 | 1 | 1 | 1 |
| | | | Other organic acid *10-2 | - | - | - |
| | | Compound (E) | 2-Mercaptobenzothiazole *11 | - | - | - |
| | | | N-Cyclohexyl-2-benzothiazolylsulfenamide *12 | - | - | - |
| | | | 1.3-Diphenylguanidine *13 | - | 0.6 | 0.6 |
| | Second kneading stage | Organic acid compound (F) | Stearic acid *10 | 1 | 1 | 1 |
| | | Age resistor | 6PPD *14 | 1 | 1 | 1 |
| | | | TMDQ *15 | 1 | 1 | 1 |
| | | Zinc oxide | Zinc oxide *16 | 2.5 | 2.5 | 2.5 |
| | | Compound (E) | 1,3-Diphenylguanidine | 0.6 | - | - |
| | | | MBTS *17 | 1 | 1 | 1 |
| | | | TBBS *18 | 0.6 | 0.6 | 0.6 |
| | | Vulcanizing agent (G) | Sulfur *19 | 1.5 | 1.5 | 1.5 |
| Tire performance | | | Ice and snow performance | 100 | 102 | 100 |
| | | | Wet performance | 100 | 112 | 118 |
| | | | Abrasion resistance | 100 | 102 | 100 |

Comparison of Example 11 and Comparative Example 15 demonstrates that an effect of enabling a good balance of ice and snow performance, wet performance, and abrasion resistance is achieved with respect to a tire produced using the presently disclosed rubber composition.

INDUSTRIAL APPLICABILITY

According to the present disclosure, it is possible to (i) provide a method for producing a rubber composition through which a rubber composition capable of providing a tire with a good balance of ice and snow performance, wet performance, and abrasion resistance can be produced, (ii) provide a rubber composition capable of providing a tire with a good balance of ice and snow performance, wet performance, and abrasion resistance, and (iii) provide a tire having a good balance of ice and snow performance, wet performance, and abrasion resistance.

REFERENCE SIGNS LIST

100 tire
111, 112 bead core
113, 114 stiffener
115 belt
118 tread
119 sidewall
121 carcass ply
130 inner liner
CL tire equatorial plane

**Claims**

1.  A method for producing a rubber composition containing:

    100 parts by mass of a rubber component (A) including polybutadiene rubber and at least 50 mass% of a styrene-butadiene copolymer rubber;
    a filler (B) including 80 parts by mass to 100 parts by mass of silica relative to 100 parts by mass of the rubber component (A) and carbon black, wherein the carbon black constitutes no greater than 20 mass% of the filler (B);
    a silane coupling agent (C);
    7 parts by mass to 20 parts by mass of a thermoplastic resin (D);
    at least one compound (E) selected from guanidines, sulfenamides, and thiazoles;
    an organic acid compound (F); and
    a vulcanizing agent (G),
    the method comprising kneading the rubber composition over a plurality of stages, wherein
    the kneading includes:

    a first kneading stage of kneading 100 parts by mass of the rubber component (A), the filler (B) including at least 80 parts by mass of silica, the silane coupling agent (C), at least 7 parts by mass of the thermoplastic resin (D), all or some of the compound (E), and all or some of the organic acid compound (F); and
    a second kneading stage of, after the first kneading stage, kneading the vulcanizing agent (G) and a kneaded product prepared through kneading in the first kneading stage.

2.  The method for producing a rubber composition of claim 1 or 2, wherein
    the rubber composition further contains an oil (H), and
    the oil (H) is compounded in an amount of at least 40 parts by mass relative to 100 parts by mass of the rubber component (A).

3.  The method for producing a rubber composition of claim 1 or 2, wherein
    stearic acid constitutes at least 50% of the organic acid compound (F).

4.  A rubber composition produced by the method for producing a rubber composition of any one of claims 1 to 3.

**5.** A tire comprising a tread in which the rubber composition of claim 4 is used.

**Patentansprüche**

**1.** Verfahren zur Herstellung einer Kautschukzusammensetzung, die Folgendes enthält:

100 Masseteile einer Kautschukkomponente (A), die Polybutadienkautschuk und mindestens 50 Masse-% eines Styrol-Butadien-Copolymerkautschuks umfasst;
einen Füllstoff (B), der 80 Masseteile bis 100 Masseteile Siliciumdioxid, auf 100 Masseteile der Kautschukkomponente (A) bezogen, und Ruß umfasst, wobei der Ruß nicht mehr als 20 Masse-% des Füllstoffs (B) darstellt;
einen Silanhaftvermittler (C);
7 Masseteile bis 20 Masseteile eines thermoplastischen Harzes (D);
mindestens eine Verbindung (E) ausgewählt unter Guanidinen, Sulfenamiden und Thiazolen;
eine organische Säureverbindung (F); und
ein Vulkanisationsmittel (G),
wobei das Verfahren das Kneten der Kautschukzusammensetzung über eine Mehrzahl von Stufen umfasst, wobei
das Kneten Folgendes umfasst:

eine erste Knetstufe des Knetens von 100 Masseteilen der Kautschukkomponente (A), des Füllstoffs (B), der mindestens 80 Masseteile Siliciumdioxid umfasst, des Silanhaftvermittlers (C), von mindestens 7 Masseteilen des thermoplastischen Harzes (D), der gesamten oder eines Teils der Verbindung (E) und der gesamten oder eines Teils der organischen Säureverbindung (F); und
eine zweite Knetstufe, nach der ersten Knetstufe, des Knetens des Vulkanisationsmittels (G) und eines gekneteten Produkts, das durch Kneten in der ersten Knetstufe hergestellt worden ist.

**2.** Verfahren zur Herstellung einer Kautschukzusammensetzung nach Anspruch 1 oder 2, wobei
die Kautschukzusammensetzung ferner ein Öl (H) enthält und
das Öl (H) in einer Menge von mindestens 40 Masseteilen, auf 100 Masseteile der Kautschukkomponente (A) bezogen, compoundiert wird.

**3.** Verfahren zur Herstellung einer Kautschukzusammensetzung nach Anspruch 1 oder 2, wobei
Stearinsäure mindestens 50 % der organischen Säureverbindung (F) darstellt.

**4.** Kautschukzusammensetzung, die durch das Verfahren zur Herstellung einer Kautschukzusammensetzung nach einem der Ansprüche 1 bis 3 hergestellt wird.

**5.** Reifen umfassend eine Lauffläche, wobei die Kautschukzusammensetzung nach Anspruch 4 verwendet wird.

**Revendications**

**1.** Procédé de production d'une composition de caoutchouc contenant:

100 parties en masse d'un constituant de caoutchouc (A) comprenant du caoutchouc de polybutadiène et au moins 50 % en masse d'un caoutchouc copolymère de styrène-butadiène;
une charge (B) comprenant 80 parties en masse à 100 parties en masse de silice par rapport à 100 parties en masse du constituant de caoutchouc (A) et du noir de carbone, où le noir de carbone ne constitue pas plus de 20 % en masse de la charge (B);
un agent de couplage au silane (C);
7 parties en masse à 20 parties en masse d'une résine thermoplastique (D);
au moins un composé (E) sélectionné parmi les guanidines, les sulfénamides, et les thiazoles;
un composé acide organique (F); et
un agent de vulcanisation (G),
le procédé comprenant le malaxage de la composition de caoutchouc sur une pluralité d'étapes, où
le malaxage comprend:

une première étape de malaxage consistant à malaxer 100 parties en masse du constituant de caoutchouc (A), la charge (B) comprenant au moins 80 parties en masse de silice, l'agent de couplage au silane (C), au moins 7 parties en masse de résine thermoplastique (D), tout ou une partie du composé (E), et tout ou une partie du composé acide organique (F); et

une seconde étape de malaxage, après la première étape de malaxage, consistant à malaxer l'agent de vulcanisation (G) et un produit malaxé préparé par malaxage dans la première étape de malaxage.

2. Procédé de production d'une composition de caoutchouc selon la revendication 1 ou 2, dans lequel la composition de caoutchouc contient en outre une huile (H), et

l'huile (H) est formée en une quantité d'au moins 40 parties en masse par rapport à 100 parties en masse du constituant de caoutchouc (A).

3. Procédé de production d'une composition de caoutchouc selon la revendication 1 ou 2, dans lequel l'acide stéarique constitue au moins 50 % du composé acide organique (F).

4. Composition de caoutchouc produite par le procédé de production d'une composition de caoutchouc selon l'une quelconque des revendications 1 à 3.

5. Pneumatique comprenant une bande de roulement dans laquelle la composition de caoutchouc selon la revendication 4 est utilisée.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2012043853 A1